# EUROPÄISCHE PATENTSCHRIFT

(11) **EP 0 395 788 B1**
(45) Veröffentlichungstag und Bekanntmachung des Hinweises auf die Patenterteilung: **28.04.1993**
(21) Anmeldenummer: 89110101.6
(22) Anmeldetag: 03.06.1989
(51) Int. Cl.: G01K 5/64, G12B 5/00, G01F 23/22

(54) **Thermobimetallmesswerk**
Thermostatic bimetal measuring unit
Système de mesure à bilame thermique

(30) Priorität: 29.04.1989 DE 3914279
(43) Veröffentlichungstag der Anmeldung: 07.11.1990
(73) Patentinhaber: VDO Adolf Schindling AG, D-60487 Frankfurt (DE)
(72) Erfinder: Unfried, Helmut, D-6308 Butzbach (DE); Wesner, Gerhard, D-6231 Sulzbach/Ts. (DE)
(74) Vertreter: Klein, Thomas, Dipl.-Ing. (FH)

(56) Entgegenhaltungen:
- US-A- 2 112 047

## Beschreibung

Die Erfindung betrifft ein Thermobimetallmeßwerk mit einem Bimetallkörper, welcher auf einem Justierhebel angeordnet ist, der zum Justieren auf einer Rückenplatte um eine in der Rückenplatte verschiebliche Schwenkachse verschwenkbar gehalten ist.

Aus US-A-2 112 047 ist ein Thermobimetallmeßwerk mit einer Rückenplatte worauf ein Thermobimetallkörper und ein Justierstreifen angeordnet sind, bekannt.

Thermobimetallmeßwerke der vorstehenden Art werden zum Beispiel in Kraftfahrzeugen eingesetzt, um in Verbindung mit einem Vorratsgeber den Flüssigkeitsvorrat in einem Kraftfahrzeugtank zu messen. Bei solchen Bimetallmeßwerken greift üblicherweise der Bimetallkörper mit einem Stift in eine Kulissenführung, welche in radialer Ausrichtung in einem mit der Zeigerwelle fest verbundenen Bauteil vorgesehen ist. Eine Heizwicklung wird je nach Füllstand mehr oder minder vom Strom durchflossen, so daß sich der Bimetallkörper mehr oder minder erwärmt und verformt und über die Kulissenführung die Zeigerwelle verdreht.

Um solche Thermobimetallmeßwerke justieren zu können, ist der Bimetallkörper auf einem Justierhebel angeordnet, welcher auf der Rückenplatte befestigt ist und zum Zwecke der Justage mittels eines Einstellexzenters um eine Schwenkachse verdreht und zusätzlich quer dazu verschoben werden kann. Um diese Verstellmöglichkeit zu erreichen, ist der Justierhebel mit durch Langlöcher geführten Schrauben mit der Rückenplatte verbunden. Das führt zu unerwünscht hohen Fertigungs- und Montagekosten.

Der Erfindung liegt die Aufgabe zugrunde, ein Thermobimetallmeßwerk der eingangs genannten Art so auszubilden, daß sein Justierhebel mit möglichst einfachen Mitteln auf der Rückenplatte justierbar befestigt ist.

Diese Aufgabe wird erfindungsgemäß dadurch gelöst, daß die Schwenkachse des Justierhebels durch einen in einen Schlitz der Rückenplatte greifenden Abschnitt des Justierhebels gebildet ist und daß der Justierhebel einen durch den Schlitz geführten und über die Rückseite der Rückenplatte greifenden Halteabschnitt hat.

Durch diesen in einen Schlitz greifenden Halteabschnitt ist der Justierhebel in diesem Bereich auf der Rückenplatte gehalten, läßt sich aber dennoch in Richtung des Schlitzes verschieben und um einen in den Schlitz greifenden Abschnitt schwenken. Dadurch werden Befestigungsschrauben zum Halten des Justierhebels und Langlöcher im Justierhebel zum Durchführen der Befestigungsschrauben unnötig. Das erfindungsgemäße Thermobimetallmeßwerk ist deshalb einfacher aufgebaut als die bisher bekannten Thermobimetallmeßwerke, ohne hinsichtlich seiner Funktionweise beeinträchtigt zu sein.

Eine ganz besonders vorteilhafte Ausgestaltung der Erfindung besteht darin, daß die Schwenkachse durch eine in den Schlitz greifende Einprägung eines Haltearmes gebildet ist, der entlang des Schlitzes verläuft, mit seinem Ende durch den Schlitz hindurchgeführt ist und dort den Halteabschnitt aufweist. Bei dieser Ausführungsform ist der Justierhebel durch die Schwenkachse und durch den durch den Schlitz führenden Abschnitt zweifach im Schlitz gehalten. Er ist deshalb beim Verschieben in Richtung des Schlitzes besonders gut geführt.

Durch Drücken auf den Haltearm kann man erreichen, daß der Halteabschnitt von der Rückenplatte abhebt, um anschließend die Justage mittels des Einstellexzenters vornehmen zu können, wenn gemäß einer weiteren Ausgestaltung der Erfindung der Haltearm mit Abstand zur Rückenplatte verläuft und der Halteabschnitt des Haltearmes durch Federkräfte des Haltearmes gegen die Rückseite der Rückenplatte anliegt.

Gänzlich ohne Befestigungsschrauben ist der Justierhebel auf der Rückenplatte gehalten, wenn ein zum Verstellen des Justierhebels in der Rückenplatte angeordneter Einstellexzenter mit einem Bund auf der der Rückenplatte abgewandten Seite über den Justierhebel greift. Ein solcher Einstellexzenter hält in seinem Bereich den Justierhebel auf der Rückenplatte.

Der Einstellexzenter ist auf besonders einfache Weise axial in der Rückenplatte fixiert, wenn er auf der Rückseite der Rückenplatte durch eine über ihn geschobene Klemmscheibe axial fixiert ist.

Der Halteabschnitt kann auf einfache Weise in den Schlitz der Rückenplatte eingesetzt und über die Rückseite der Rückenplatte greifen, wenn der Schlitz in der Rückenplatte an seinem äußeren Ende eine T-förmige Erweiterung aufweist und der Halteabschnitt des Haltearmes als ein quer zur Haupterstreckung des Haltearmes ausgerichtetes, durch die T-förmige Erweiterung zu steckendes T-Stück ist.

Auf die T-förmige Erweiterung im Schlitz kann verzichtet werden, wenn gemäß einer anderen Ausgestaltung der Erfindung der Halteabschnitt ein nach dem Durchführen durch den Schlitz verschränktes und dadurch zu beiden Seiten auf der Rückenplatte aufsitzendes T-Stück ist.

Besonders kostengünstig ist das Thermobimetallmeßwerk herstellbar, wenn der Halteabschnitt durch eine rechtwinklig zum Justierhebel ausgerichtete, beim Montieren des Justierhebels durch den Schlitz zu schiebende und anschließend nach einer Seite hin verschränkte Fahne gebildet ist.

Der Justierhebel wird gegen Verrutschen auf der Rückenplatte besonders sicher gehalten, wenn der Halteabschnitt mit einer angeformten Spitze in die Rückseite der Rückenplatte greift.

Zur weiteren Kostenersparnis trägt es bei, wenn die Rückenplatte zugleich die Leiterplatte für das Thermobimetallmeßwerk bildet.

Die Erfindung läßt zahlreiche Ausführungsmöglichkeiten zu. Mehrere davon sind in der Zeichnung dargestellt und werden nachfolgend beschrieben. Diese zeigt in
- Fig. 1: eine Seitenansicht eines erfindungsgemäßen Thermobimetallmeßwerkes,
- Fig. 2: eine Draufsicht auf das Thermobimetallmeßwerk,
- Fig. 3: eine Ansicht des Thermobimetallmeßwerkes nach den Figuren 1 und 2 von unten,
- Fig. 4: einen Längsschnitt durch einen Justierhebel des Thermobimetallmeßwerkes,
- Fig. 5: eine Seitenansicht des Justierhebels,
- Fig. 6: eine Draufsicht auf den Justierhebel,
- Fig. 7: eine Draufsicht auf eine zweite Ausführungsform eines Thermobimetallmeßwerkes,
- Fig. 8: eine Ansicht des Thermobimetallmeßwerkes nach Figur 7 von unten,
- Fig. 9: einen Längsschnitt durch den Justierhebel des Thermobimetallmeßwerkes nach den Figuren 6 und 7,
- Fig. 10: eine Draufsicht auf den Justierhebel nach der Figur 9,
- Fig. 11: einen Schnitt durch eine weitere Ausführrungsform eines Thermobimetallmeßwerkes,
- Fig. 12: eine Draufsicht auf das Thermobimetallmeßwerk nach Figur 10.

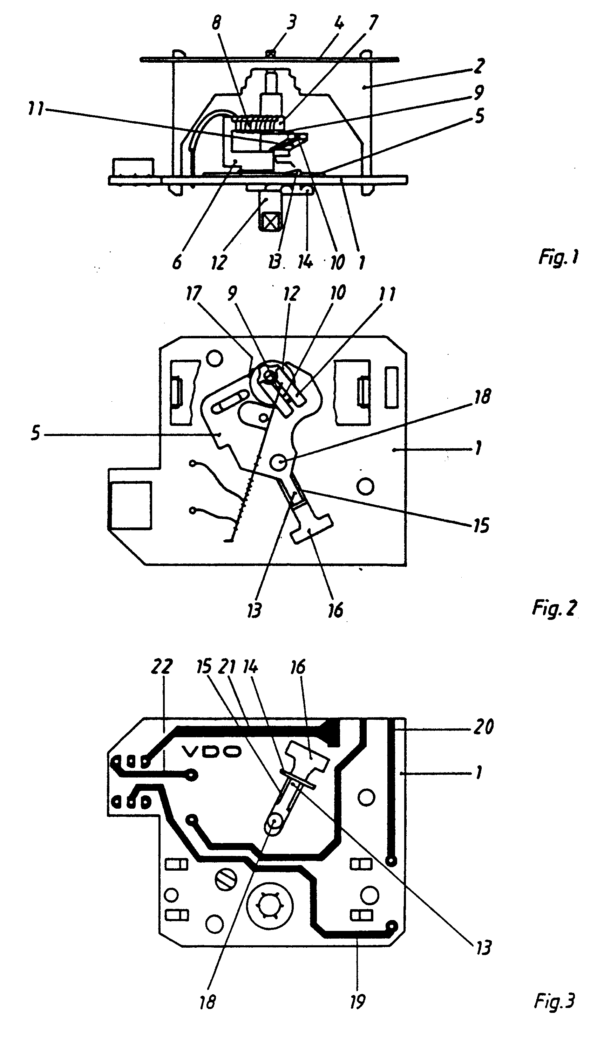

Die Figur 1 zeigt eine als Leiterplatte ausgebildete Rückenplatte 1, in die eine Tragbrücke 2 verrastet ist, welche mit Abstand zur Rückenplatte 1 ein von einer Zeigerwelle 3 durchdrungenes Zifferblatt 4 haltert. Von oben her liegt auf der Rückenplatte 1 ein Justierhebel 5, auf dem ein u-förmiger Thermobimetallkörper 6 befestigt ist. Der Thermobimetallkörper 6 hat auf seinem oberen Schenkel 7 eine Heizwicklung 8. Wird diese vom Strom durchflossen, so verbiegt sich der von ihr umwickelte Schenkel 7. Dieser greift mit einem an seinem freien Ende angebrachten Stift 9 in eine Kulissenführung 10 eines in radialer Richtung an der Zeigerwelle 3 vorgesehenen Armes 11 und verschwenkt dadurch seiner Durchbiegung entsprechend die Zeigerwelle 3.

Nach unten hin ragt aus der Rückenplatte 1 ein Einstellexzenter 12, mit dem der Justierhebel 5 eingestellt werden kann. Weiterhin läßt die Figur 1 erkennen, daß der Justierhebel 5 einen Haltearm 13 hat, der durch die Rückenplatte 1 führt und sich mit einem T-förmigen Halteabschnitt 14 auf der Rückseite der Rückenplatte 1 abstützt.

Die Figur 2 läßt erkennen, daß in der Rückenplatte 1 ein Schlitz 15 vorgesehen ist, der am äußeren Ende eine T-förmige Erweiterung 16 hat. Weiterhin ist in Figur 2 der Einstellexzenter 12 zu sehen, welcher in eine Ausnehmung 17 des Justierhebels 5 greift. Verdreht man diesen Einstellexzenter 12, so schwenkt der Justierhebel 5 um eine Schwenkachse 18, die durch eine in den Schlitz 15 greifende Einprägung des Justierhebels 5 gebildet ist. Der Haltearm 13 muß hierzu natürlich mit entsprechendem Spiel durch den Schlitz 15 geführt sein. Die Funktionsweise des Thermobimetallmeßwerkes ist dieser Figur 2 deutlich zu entnehmen, da der Arm 11 mit der Kulissenführung 10 zu erkennen ist, in die der Stift 9 greift.

Die in Figur 3 dargestellte Ansicht der Rückenplatte 1 von unten läßt erkennen, daß der T-förmige Halteabschnitt 14 bei der Montage durch die T-förmige Erweiterung geschoben werden kann und über beide Seiten des Schlitzes 15 greift, wenn man den Justierhebel 5 anschließend in Richtung des in den Figuren 1 und 2 gezeigten Einstellexzenters 12 schiebt. Zu sehen ist in Figur 3 desweiteren, wie die durch eine Einprägung erzeugte Schwenkachse 18 in den Schlitz 15 greift. Weiterhin zeigt Figur 3 die in der Rückenplatte 1 verlaufenden Leiterbahnen 19, 20, 21, 22.

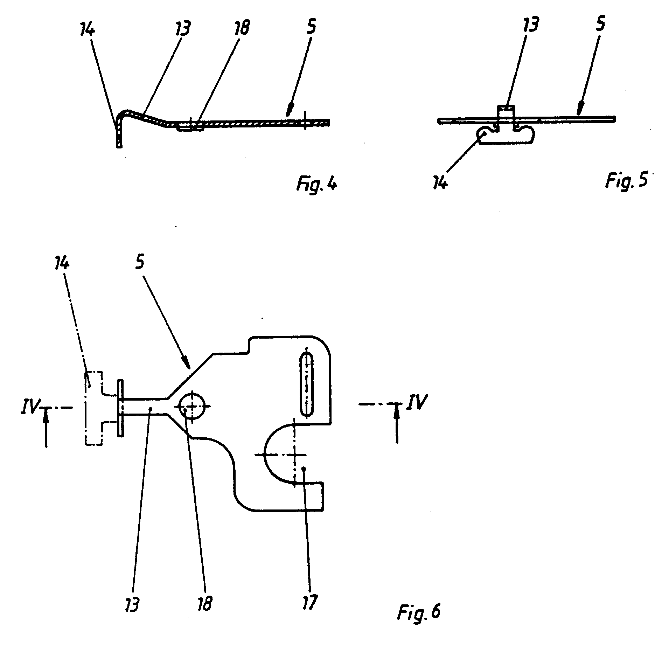

Die Figuren 4 bis 6 lassen die Gestaltung des Justierhebels 5 genauer erkennen. Zu sehen ist in den Figuren 4 und 5, daß der Haltearm 13 aus der Ebene des Justierhebels 5 heraus nach oben und dann nach unten verläuft und an seinem freien Ende den Halteabschnitt 14 hat, mit dem er unter die Rückenplatte 1 greift. Drückt man im montierten Zustand des Justierhebels 5 gegen den Haltearm 13, so kann man den Halteabschnitt 14 von der Rückseite der Rückenplatte 1 wegdrücken und danach den Justierhebel 5 verschieben.

In Figur 4 ist auch die durch eine Einprägung erzeugte Schwenkachse 18 zu erkennen, welche im Durchmesser so bemessen ist, daß sie in den Schlitz 15 der Rückenplatte 1 einzugreifen vermag.

Die Figur 6 zeigt, daß der Haltearm 13 in etwa der Ausnehmung 17 gegenüberliegt, in die der in den Figuren 1 und 2 gezeigte Einstellexzenter 12 greift. Strichpunktiert ist in Figur 6 die Lage des Halteabschnittes 14 dargestellt, die dieser einnimmt, bevor er in die abgewinkelte, in durchgezogenen Linien dargestellte Stellung gebogen wurde.

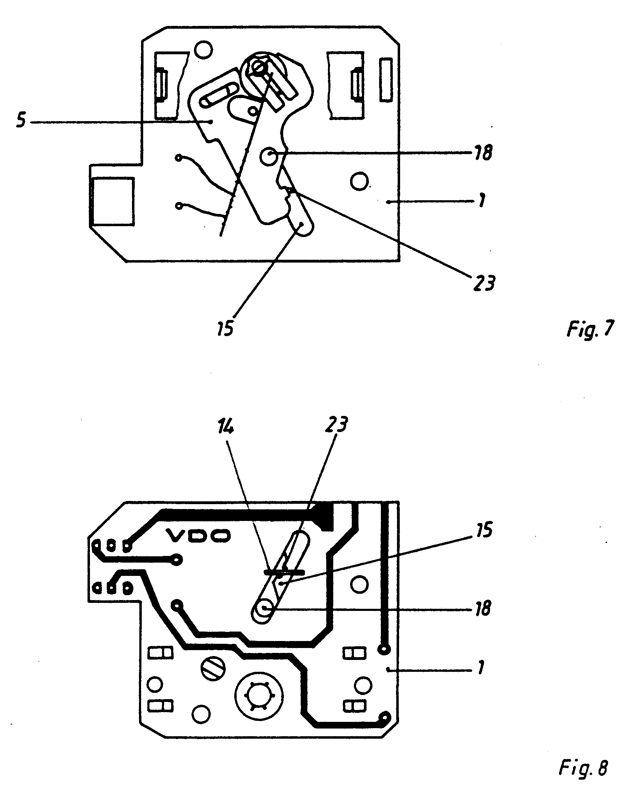

Bei der Ausführungsform nach den Figuren 7 und 8 hat der Justierhebel 5 keinen Haltearm, vielmehr ist an ihm unmittelbar ein Abschnitt 23 angeformt, der durch den Schlitz 15 greift und, was in der Figur 8 zu sehen ist, auf der Rückseite der Rückenplatte 1 den Halteabschnitt 14 hat. Dieser ist bei der Montage des Justierhebels 5 fluchtend zum Schlitz 15 ausgerichtet und wird um etwa 45 Grad verschränkt, nachdem er durch den Schlitz 15 hindurchgeführt ist, so daß er zu beiden Seiten des Schlitzes 15 auf der Rückseite der Rückenplatte 1 aufsitzt. In Übereinstimmung mit der vorangegangenen Ausführungsform hat der Justierhebel 5 eine durch eine Einprägung gebildete Schwenkachse 18, mit der er in den Schlitz 15 eingreift.

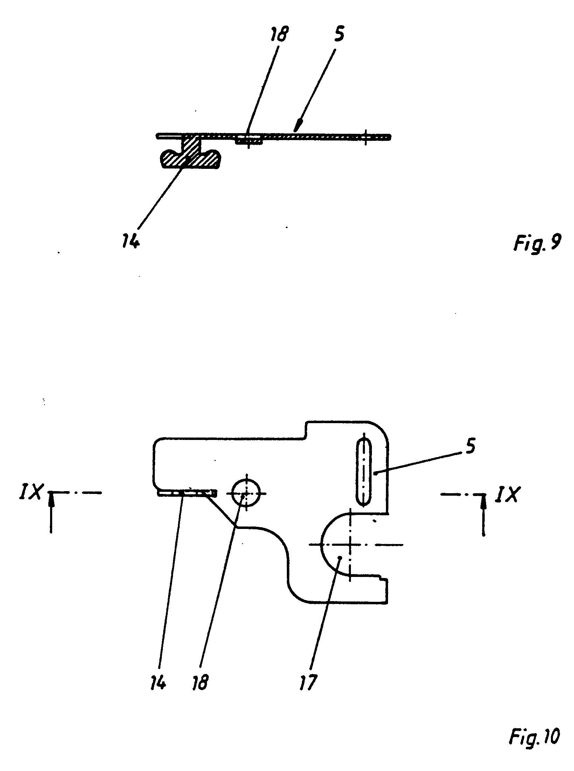

Die genaue Gestaltung des Justierhebels 5 der Ausführungsform nach den Figuren 7 und 8 ergibt sich aus den Figuren 9 und 10. Figur 9 zeigt, daß der Halteabschnitt 14, genau wie bei der zuvor beschriebenen Ausführungsform, symmetrisch ausgebildet ist und mit zwei bogenförmigen Endbereichen zum Aufsitzen auf der Rückseite der Rückenplatte 1 ausgebildet ist. Abweichend von der ersten Ausführungsform ist der Halteabschnitt 14 nicht an einem nicht gegen die Rückenplatte 1 anliegenden Bereich des Justierhebels 5 vorgesehen.

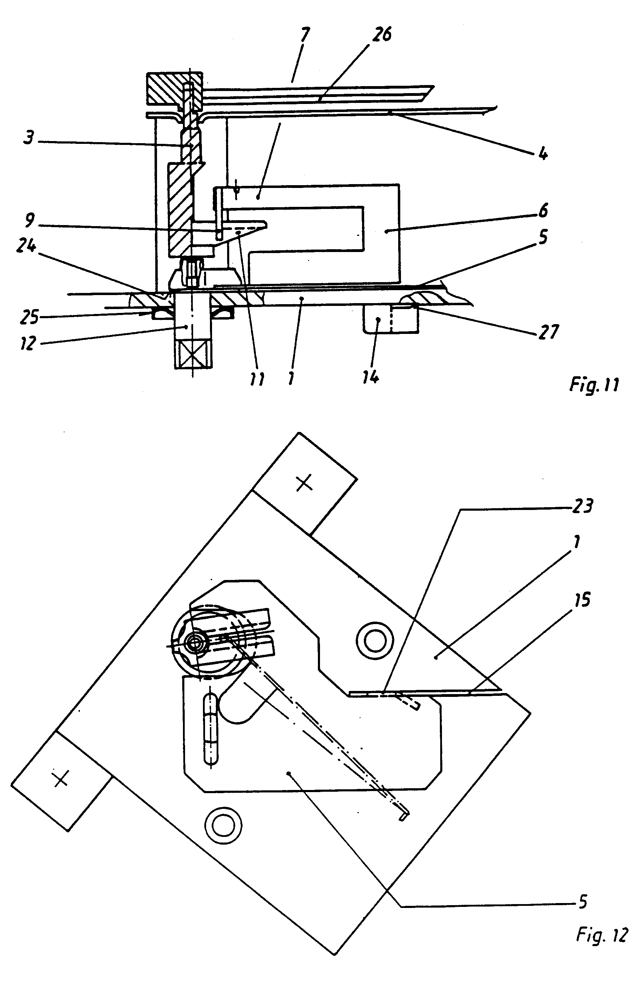

Die Figur 11 zeigt, daß der Einstellexzenter 12 mit einem Bund 24 von oben her auf dem Justierhebel 5 aufsitzt. Dadurch hält er den Justierhebel 5 auf der Rückenplatte 1. Der Einstellexzenter 12 seinerseits ist durch eine auf ihn von der Rückseite der Rückenplatte 1 aufgeschobene Klemmscheibe 25 axial auf der Rückenplatte 1 fixiert. Deutlicher als die vorangehenden Figuren zeigt Figur 11, wie der obere Schenkel 7 des Thermobimetallkörpers 6 mit seinem Stift 9 in den Arm 11 greift und dadurch die Zeigerwelle 3 zu verschwenken vermag. Zusätzlich zum Zifferblatt 4 ist in Figur 11 auch ein auf der Zeigerwelle 3 angeordneter Zeiger 26 dargestellt.

Wie die Figur 12 erkennen läßt, ist bei dieser Ausführungsform der Schlitz 15 relativ schmal und verläuft bis zum Rand der Rückenplatte 1. Durch diesen Schlitz 15 greift der Justierhebel 5 wiederum mit einem Abschnitt 23. Am freien Ende dieses Abschnitts 23 ist als Halteabschnitt 14 eine Fahne angeformt, was in Figur 11 zu sehen ist. Diese hat an ihrem äußeren Ende eine Spitze 27. Nach der Montage des Justierhebels 5 wird der fahnenartige Halteabschnitt 14 nach einer Seite hin verschränkt, so daß er sich mit seiner Spitze 27 auf die Rückseite der Rückenplatte 1 aufsetzt und dadurch den Justierhebel 5 fixiert.

## Patentansprüche

1. Thermobimetallmeßwerk mit einem Bimetallkörper (6), welcher auf einem Justierhebel (5) angeordnet ist, der zum Justieren auf einer Rückenplatte (1) um eine in der Rückenplatte verschiebliche Schwenkachse (18) verschwenkbar gehalten ist, wobei die Schwenkachse (18) des Justierhebels (5) durch einen in einen Schlitz (15) der Rückenplatte (1) greifenden Abschnitt des Justierhebels (5) gebildet ist und wobei der Justierhebel (5) einen durch den Schlitz (15) geführten und über die Rückseite der Rückenplatte (1) greifenden Halteabschnitt (14) hat.

2. Thermobimetallmeßwerk nach Anspruch 1, dadurch gekennzeichnet, daß die Schwenkachse (18) durch eine in den Schlitz (15) greifende Einprägung eines Haltearmes (13) gebildet ist, der entlang des Schlitzes (15) verläuft, mit seinem Ende durch den Schlitz (15) hindurchgeführt ist und dort den Halteabschnitt (14) aufweist.

3. Thermobimetallmeßwerk nach Anspruch 2, dadurch gekennzeichnet, daß der Haltearm (13) mit Abstand zur Rückenplatte (1) verläuft und der Halteabschnitt (14) des Haltearmes (13) durch Federkräfte des Haltearmes (13) gegen die Rückseite der Rückenplatte (1) anliegt.

4. Thermobimetallmeßwerk nach zumindest einem der vorangehenden Ansprüche, dadurch gekennzeichnet, daß zum Verstellen des Justierhebels (5) ein in der Rückenplatte (1) angeordneter Einstellexzenter (12) mit einem Bund (24) auf der der Rückenplatte (1) abgewandten Seite über den Justierhebel (5) greift.

5. Thermobimetallmeßwerk nach Anspruch 4, dadurch gekennzeichnet, daß der Einstellexzenter (12) auf der Rückseite der Rückenplatte (1) durch eine über ihn geschobene Klemmscheibe (25) axial fixiert ist.

6. Thermobimetallmeßwerk nach zumindest einem der vorangehenden Ansprüche, dadurch gekennzeichnet, daß der Schlitz (15) in der Rückenplatte (1) an seinem äußeren Ende eine T-förmige Erweiterung (16) aufweist und der Halteabschnitt (14) des Haltearmes (13) als ein quer zur Haupterstreckung des Haltearmes (13) ausgerichtetes, durch die T-förmige Erweiterung (16) zu steckendes T-Stück ist.

7. Thermobimetallmeßwerk nach zumindest einem der vorangehenden Ansprüche, dadurch gekennzeichnet, daß der Halteabschnitt (14) ein nach dem Durchführen durch den Schlitz (15) verschränktes und dadurch zu beiden Seiten auf der Rückenplatte (1) aufsitzendes T-Stück ist.

8. Thermobimetallmeßwerk nach zumindest einem der vorangehenden Ansprüche, dadurch gekennzeichnet, daß der Halteabschnitt (14) durch eine rechtwinklig zum Justierhebel (5) ausgerichtete, beim Montieren des Justierhebels (5) durch den Schlitz zu schiebende und anschließend nach einer Seite hin verschränkte Fahne gebildet ist.

9. Thermobimetallmeßwerk nach Anspruch 8, dadurch gekennzeichnet, daß der Halteabschnitt (14) mit einer angeformten Spitze (27) in die Rückseite der Rückenplatte (1) greift.

10. Thermobimetallmeßwerk nach zumindest einem der vorangehenden Ansprüche, dadurch gekennzeichnet, daß die Rückenplatte (1) zugleich die Leiterplatte für das Thermobimetallmeßwerk bildet.

## Claims

1. A thermally-actuated bimetallic measuring unit with a bimetallic body (6) which is disposed on an adjusting lever (5) which is mounted for adjustment on a backplate (1) so that it can pivot about a pivot pin (18) which can be moved within the backplate, wherein the pivot pin (18) of the adjusting lever (5) is formed by a section of the adjusting lever (5) which engages in a slot (15) in the backplate (1) and wherein the adjusting lever (5) has a retaining section (14) which is guided by the slot (15) and which overlaps the rear face of the backplate (1).

2. A thermally-actuated bimetallic measuring unit according to Claim 1, characterised in that the pivot pin (18) is formed by an indentation, which engages in the slot (15), of a retaining arm (13) which runs along the slot (15), which is guided at its end through the slot (15) and which has the retaining section (14) there.

3. A thermally-actuated bimetallic measuring unit according to Claim 2, characterised in that the retaining arm (13) extends at a distance from the backplate (1) and the retaining section (14) of the retaining arm (13) is seated closely against the rear face of the backplate (1) by means of spring forces from the retaining arm (13).

4. A thermally-actuated bimetallic measuring unit according to at least one of the preceding Claims, characterised in that an adjusting eccentric (12) disposed on the backplate (1) overlaps the adjusting lever (5) by means of a shoulder (24) on the side remote from the backplate (1) for adjusting the adjusting lever (5).

5. A thermally-actuated bimetallic measuring unit according to Claim 4, characterised in that the adjusting eccentric (12) is axially fixed on the rear face of the backplate (1) by means of a locking washer (25) pushed over it.

6. A thermally-actuated bimetallic measuring unit according to at least one of the preceding Claims, characterised in that the slot (15) in the backplate (1) has a T-shaped extension (16) at its outer end and the retaining section (14) of the retaining arm (13) is formed as a T-piece aligned transversely to the major span of the retaining arm (13) for insertion through the T-shaped extension (16).

7. A thermally-actuated bimetallic measuring unit according to at least one of the preceding Claims, characterised in that the retaining section (14) is a T-piece which is twisted after being guided through the slot (15) and is thus seated on both sides on the backplate (1).

8. A thermally-actuated bimetallic measurement unit according to at least one of the preceding Claims, characterised in that the retaining section (14) is formed by a vane which is aligned at right angles to the adjusting lever (5), which is pushed through the slot on mounting the adjusting lever (5) and which is finally twisted to one side.

9. A thermally-actuated bimetallic measuring unit according to Claim 8, characterised in that the retaining section (14) engages by means of a point (27) formed thereon in the rear face of the backplate (1).

10. A thermally-actuated bimetallic measurement unit according to at least one of the preceding Claims, characterised in that the backplate (1) at the same time forms the printed circuit board for the thermally-actuated bimetallic measurement unit.

## Revendications

1. Système de mesure à bilame thermique comprenant un corps de bilame (6) disposé sur un levier d'ajustement (5) qui, en vue de l'ajustement, est monté pivotant sur une plaque arrière (1) autour d'un axe de pivotement (18) déplaçable en translation dans la plaque arrière, dans lequel l'axe de pivotement (18) du levier d'ajustement (5) est formé par un segment du levier d'ajustement (5) pénétrant dans une fente (15) de la plaque arrière (1), et dans lequel le levier d'ajustement (5) possède un segment de maintien (14) guidé à travers la fente (15) et s'étendant par-dessus le dos de la plaque arrière (1).

2. Système de mesure à bilame thermique selon la revendication 1, caractérisé en ce que l'axe de pivotement (18) est formé par une empreinte pénétrant dans la fente (15) et réalisée dans une bras de maintien (13) s'étendant le long de la fente (15), passant par son extrémité à travers cette fente (15) et portant le segment de maintien (14) à cette extrémité.

3. Système de mesure à bilame thermique selon la revendication 2, caractérisé en ce que le bras de maintien (13) s'étend à distance de la plaque arrière (1) et le segment de maintien (14) du bras de maintien (13) est appliqué contre le dos de la plaque arrière (1) par des forces élastiques du bras de maintien (13).

4. Système de mesure à bilame thermique selon au moins une des revendications précédentes, caractérisé en ce que, pour le déplacement du levier d'ajustement (5), un excentrique de réglage (12), disposé dans la plaque arrière (1), s'étend par un collet (24) par-dessus le levier d'ajustement (5) du côté éloigné de la plaque arrière (1).

5. Système de mesure à bilame thermique selon la revendication 4, caractérisé en ce que l'excentrique de réglage (12) est fixé axialement sur le dos de la plaque arrière (1) par une rondelle de serrage (25) glissée sur l'excentrique.

6. Système de mesure à bilame thermique selon au moins une des revendications précédentes, caractérisé en ce que la fente (15) ménagée dans la plaque arrière (1) présente un élargissement en forme de T (16) à son extrémité extérieure, et le segment de maintien (14) du bras de maintien (13) est une portion en T à enfiler à travers l'élargissement en forme de T (16) et orientée transversalement à l'étendue principale du bras de maintien (13).

7. Système de mesure à bilame thermique selon au moins une des revendications précédentes, caractérisé en ce que le segment de maintien (14) est une portion en T qui, après le passage à travers la fente (15), est pourvue d'une torsion et s'appuie de ce fait sur la plaque arrière (1) des deux côtés de la fente.

8. Système de mesure à bilame thermique selon au moins une des revendications précédentes, caractérisé en ce que le segment de maintien (14) est formé par un drapeau orienté à angle droit par rapport au levier d'ajustement (15), drapeau qui, lors du montage du levier d'ajustement (5), est à faire passer à travers la fente et à doter ensuite d'une torsion vers un côté.

9. Système de mesure à bilame thermique selon la revendication 8, caractérisé en ce que le segment de maintien (14) s'accroche au dos de la plaque arrière (1) par une pointe (27) formée sur lui.

10. Système de mesure à bilame thermique selon au moins une des revendications précédentes, caractérise en ce que la plaque arrière (1) forme en même temps la plaquette à circuit imprimé pour le système de mesure a bilame thermique.
